# EUROPÄISCHE PATENTSCHRIFT

(11) **EP 0 983 455 B1**
(45) Veröffentlichungstag und Bekanntmachung des Hinweises auf die Patenterteilung: **23.04.2003**
(21) Anmeldenummer: 98928288.4
(22) Anmeldetag: 18.05.1998
(51) Int. Cl.: F16K 1/44

(54) **LECKAGEFREI SCHALTENDES DOPPELSITZVENTIL**
DUAL-SEAT VALVE ABLE TO SWITCH IN A LEAK-FREE MANNER
SOUPAPE A DOUBLE SIEGE DE COMMUTATION SANS FUITES

(30) Priorität: 30.05.1997 DE 19722615
(43) Veröffentlichungstag der Anmeldung: 08.03.2000
(73) Patentinhaber: Alfa Laval LKM A/S, 6000 Kolding (DK)
(72) Erfinder: BORG, S ren, DK-8700 Horsens (DK); HOLMGAARD, Poul, DK-6100 Haderslev (DK)
(74) Vertreter: Vonnemann, Gerhard, Dr.-Ing.
(86) Internationale Anmeldenummer: EP9802910
(87) Internationale Veröffentlichungsnummer: WO98054494

(56) Entgegenhaltungen:
- EP-A- 0 174 384
- EP-A- 0 646 741
- SE-B- 424 357

## Beschreibung

Die Erfindung betrifft ein leckagefrei schaltendes Doppelsitzventil. gemäß den im Oberbegriff von Anspruch 1 definierten Merkmalen. Ein derartiges Doppelsitzventil ist aus der EP 0 174 384 A1 bekannt. Solche Ventile werden in der Nahrungsmittelindustrie, speziell in der Brau- und milchverarbeitenden Industrie verwendet, um Leitungen, die unterschiedliche Produkte führen, an ihren Verbindungsstellen trennen. Das Ventil muß eine Vermischung der unterschiedlichen Produkte zuverlässig verhindern können und hygienisch einwandfrei arbeiten können. Die beiden Schließglieder des bekannten Ventils können daher für die Reinigung des Ventilsitzes jeweils individuell einen Reinigungshub ausführen. Während der Ventilsitzreinigung trennt jedoch nur eine Einfachdichtung die beiden Leitungen. Es besteht daher die Gefahr, daß durch eine Druckspitze das geschlossene Schließglied aus seinem Ventilsitz gedrückt wird, was zu einer Vermischung der Produkte in den Leitungen führen würde. Solche Druckspitzen treten vor allem beim individuellen Anheben der Schließglieder zur Reinigung auf, da beim Öffnen des einen Schließgliedes schlagartig der Leitungsdruck auf das andere Schließglied wirkt und dessen Anpreßdruck in den Ventilsitz reduziert. Bei dem bekannten Doppelsitzventil ist daher am zweiten Ventilsitz und am dem ersten Schließglied zugewandten Ende der Ausnehmung des zweiten Schließglieds eine Nut vorgesehen. Während der Ventilsitzreinigung kann durch den durch die Nut zwischen Schließglied und Ventilsitz bzw. Ausnehmung gebildeten Spalt ein Reinigungsmittelstrom in den Leckageraum einfließen.

Die EP-A-646 741 zeigt ein Doppelsitzventil, welches ebenfalls konische Flächen an den Schließgliedern aufweist. Die entsprechenden Gegenflächen sind jedoch nur teilweise konisch und dienen lediglich als Endbegrenzung für den Reinigungshub. In dieser Stellung fließt das Reinigungsmittel durch Kanäle, die in den konischen Flächen des Sitzkörpers eingearbeitet sind. In der Reinigungsstellung des jeweiligen Schließgliedes liegen die Dichtmittel nicht gegen die entsprechende Dichtfläche des Ventilsitzes an. Eine Zentrierung des Dichtkörpers in dieser Position durch die teilweise konischen Flächen ist deshalb nicht erforderlich. Diese vorbekannte Konstruktion weist insbesondere die Nachteile auf, daß sie eine zusätzliche Dichtung aufweist und zwei der Dichtungen im schwer zugänglichen Sitzkörper angeordnet sind. Längere Demontage- und Wartungszeiten sind die Folge. Da Dichtungen auch versagen können, leidet die Betriebssicherheit darunter.

Aus der DE 38 35 944 C2 ist ebenfalls ein ähnliches Doppelsitzventil bekannt. Das zweite, untere, Schließglied ist zum Ausgleich von Druckstößen zur Ventilunterseite hin zu einem Ausgleichskolben verlängert, der den unteren Teil des Gehäuses abgedichtet durchsetzt. Beim Reinigungshub des unteren Schließglieds wird sowohl zwischen unterem Ventilteller und Ventilsitz als auch zwischen der Außenfläche des Ausgleichskolbens und der Wandung des Durchgangs im unteren Gehäuseteil ein kreisförmiger Spalt gebildet, über den Reinigungsflüssigkeit in den Leckageraum bzw. den Spülbereich für den Ausgleichskolben treten kann.

Nachteilig an dem bekannten Doppelsitzventil ist, daß der Reinigungshub sehr präzise ausgeführt werden muß, da sonst der Reinigungsspalt zwischen Ventilsitz und Schließglied zu groß wird und große Reinigungsmittelmengen in den Leckageraum einfließen. Dies führt zu einem unkontrollierten Anwachsen des Drucks im Leckageraum und somit zu einer Belastung des geschlossenen Schließglieds. Es besteht daher die Gefahr, daß das Schließglied angehoben wird und Reinigungsflüssigkeit in die produktführende Leitung übertreten kann. Nachteilig ist ferner, daß bei Öffnung des Reinigungsspalts zwischen Schließglied und Ventilsitz schlagartig der Druck im Leckageraum erhöht wird, wodurch das andere Schließglied ebenfalls aus seinem Sitz gedrückt werden kann.

Aufgabe der Erfindung ist daher, ein Doppelsitzventil der gattungsgemäßen Art anzugeben, bei dem während der Sitzreinigung Druckspitzen im Leckageraum zuverlässig vermieden werden können und eine präzise Zentrierung der Schließglieder gewährleistet isc.

Die Aufgabe wird dadurch gelöst, daß der zweite Ventilsitz mindestens einen konischen Abschnitt aufweist, der sich an die zylindrische Innenfläche anschließt und wobei einer der entsprechenden Abschnitte des zweiten Schließgliedes das Dichtmittel aufweist.

Beim Reinigungshub des Ventilgliedes dringt Reinigungsflüssigkeit nur durch den zwischen den beiden zylindrischen Flächen gebildeten Drosselspalt ein. Dadurch erfolgt der Druckaufbau im Leckageraum langsam und gleichmäßig. Sowohl Druck als auch Volumenstrom der in den Leckageraum fließenden Reinigungsflüssigkeit sind leicht kontrollierbar. Durch die Länge des Drosselspalts ist der Druck und der Volumenstrom auch relativ unempfindlich gegen Toleranzen im Hub des Schließgliedes, so daß keine genaue Justierung und Überwachung des Hubes notwendig ist. Ein starker Druckanstieg im Leckageraum während des Reinigungsvorgangs wird zuverlässig verhindert.

Druckspitzen beim Reinigungshub des Schieberkolbens werden vermieden, wenn in der Reinigungsstellung des Schieberkolbens zwischen einer zylindrischen Fläche des Schieberkolbens und dem ersten Ventilsitz ein zylindrischer Drosselspalt ausgebildet ist.

Das Dichtungsmittel am Schieberkolben und/oder am zweiten Schließglied kann als Radialdichtung ausgebildet sein. Es ist jedoch auch möglich, das Dichtungsmittel am zweiten Schließglied als axiale oder konische Dichtung auszubilden. Es ist dann am dem Schieberkolben zugewandten Ende des zweiten Schließglieds positioniert.

Die Führung des Schließgliedes beim Einfahren wird erleichtert, wenn der konische Abschnitt des zweiten Ventilsitzes sich vom zylindrischen Abschnitt des zweiten Ventilsitzes zum ersten Ventilsitz erstreckt. Durch die konische Fläche wird der Schieberkolben bei der Schließbewegung des Ventils geführt und im Ventilsitz zentriert. Die radialen Dichtmittel des Schieberkolbens werden durch die obere Kante des ersten Ventilsitzes nicht belastet und unterliegen daher einem geringeren Verschleiß.

Eine Führung und Zentrierung des zweiten Schließgliedes im Ventilsitz wird erreicht, wenn der zweite Ventilsitz einen sich zur Öffnungsseite des zweiten Schließglieds hin an den zylindrischen Abschnitt anschließenden konischen Abschnitt aufweist.

Ein schneller und einfacher Wechsel des Dichtmittels ist möglich, wenn das Schließglied aus zwei lösbar, vorzugsweise mittels einer Schraubverbindung, miteinander verbundenen Teilen aufgebaut ist, wobei zwischen den beiden Teilen das Dichtmittel vorgesehen ist.

Beim Doppelsitzventil gemäß der Erfindung besitzt das zweite Schließglied an seinem dem Schieberkolben zugewandten Ende eine Ausnehmung mit einer im wesentlichen zylindrischen, mit dem zylindrischen Ventilsitz fluchtenden Umfangswand, wobei die Ausnehmung so dimensioniert ist, um während der Öffnungsbewegung den Endabschnitt und die radialen Dichtmittel des Schieberkolbens dichtend aufzunehmen, bevor das zweite Schließglied öffnet. Da bei der Schließbewegung des Ventils die Ausnehmung des zweiten Schließglieds und der zylindrische Ventilsitz des Schieberkolbens durch die konischen Flächen des zweiten Ventilsitzes zentriert werden fluchten Ausnehmung und erster Ventilsitz. Bei der Schließbewegung des Schieberkolbens wird dieser durch die konische Fläche des zweiten Ventilsitzes Zentriert, so daß an seinen radialen Dichtungen durch die Schließbewegung nahezu kein Verschleiß verursacht wird.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren zeigen im einzelnen:
- Fig.1:: Einen Ausschnitt eines Schnittes durch eine erste Ausführungsform des Doppelsitzventils;
- Fig. 2a - c:: Einen Ausschnitt eines Schnittes durch eine erste Ausführungsform des Doppelsitzventils, wobei aufeinanderfolgende Schritte beim Öffnen des Ventils gezeigt sind;
- Fig. 3:: den Reinigungshub des ersten Schließgliedes eines Doppelsitzventils gemäß Fig. 1;
- Fig. 4:: den Reinigungshub des zweiten Schließgliedes eines Doppelsitzventils gemäß Fig. 1;
- Fig. 5a - c:: einen Ausschnitt eines Schnittes durch eine zweite Ausführungsform des Doppelsitzventils, wobei aufeinanderfolgende Schritte beim Öffnen des Ventils gezeigt sind;
- Fig. 6:: den Reinigungshub des ersten Schließgliedes eines Doppelsitzventils gemäß Fig. 4;
- Fig. 7:: den Reinigungshub des zweiten Schließgliedes eines Doppelsitzventils gemäß Fig. 5;
- Fig. 8a - c:: einen Ausschnitt eines Schnittes durch eine dritte Ausführungsform des Doppelsitzventils, wobei aufeinanderfolgende Schritte beim Öffnen des Ventils gezeigt sind;
- Fig. 9:: den Reinigungshub des ersten Schließgliedes eines Doppelsitzventils gemäß Fig. 8;
- Fig. 10:: den Reinigungshub des zweiten Schließgliedes eines Doppelsitzventils gemäß Fig. 7;

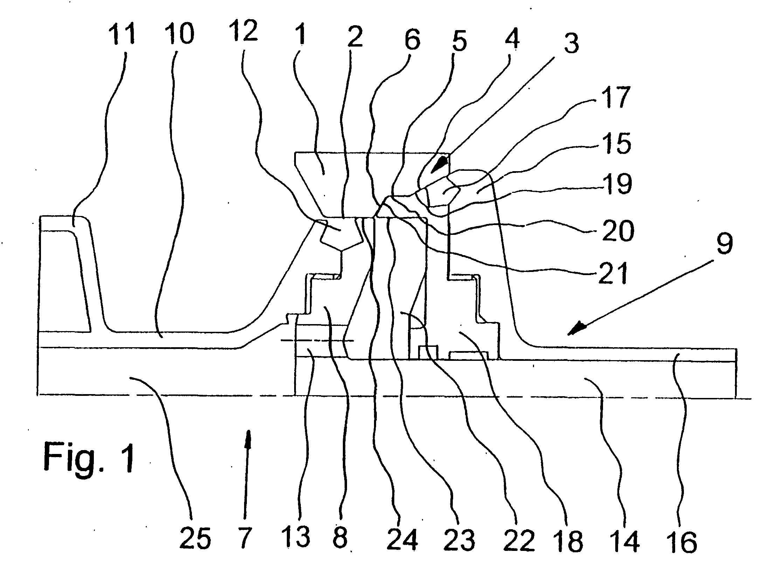

Fig. 1 zeigt ein Gehäuseteil 1, in dem ein erster, zylindrischer Ventilsitz 2 und ein zweiter Ventilsitz 3 eingeformt ist. Der zweite Ventilsitz weist einen ersten konusförmigen sowie einen zylindrischen Abschnitt 4 bzw. 5 auf. An den zylindrischen Abschnitt schließt sich in Richtung auf den ersten Ventilsitz ein zweiter, ebenfalls konusförmiger Abschnitt 6 an. An diesen Abschnitt schließt sich weiter der erste zylindrische Ventilsitz 2 an.

Im ersten Ventilsitz 2 ist ein als Schieberkolben 7 ausgebildetes erstes Schließglied aufgenommen. Der Schieberkolben 7 setzt sich zusammen aus einem ersten Teil 8, das dem zweiten Schließglied 9 zugewandt ist und einem zweiten Teil 10, das sich in einen Ausgleichskolben 11 fortsetzt. Erstes und zweites Teil weisen an ihrem Umfang jeweils eine Ausnehmung auf, die gemeinsam eine Dichtung 12 aufnehmen, die am ersten Ventilsitz 2 anliegt. Erstes und zweites Teil sind durch eine Schraubverbindung (nicht dargestellt) verbunden. Nach Ausbau der Schließglieder können erstes und zweites Teil, 8 bzw. 10 leicht voneinander gelöst werden, um die Dichtung 12 auszuwechseln. Der zylindrische Abschnitt 24 des ersten Teils 8 des Schieberkolbens 7 weist einen geringfügig geringeren Durchmesser auf als der erste Ventilsitz 2. Zwischen Ventilsitz 2 und Abschnitt 24 ist daher ein Spalt ausgebildet mit einer Weite von typischerweise 0,15 mm.

Die dem zweiten Schließglied zugewandte Fläche des ersten Teils 8 ist zu einer Öffnung 13 hin geneigt, die die Leckage zu einer Ablaufleitung 25 abführt. Die Bewegung des ersten Schließglieds erfolgt über eine erste Ventilstange 14.

Das zweite Schließglied ist ebenfalls zweiteilig aufgebaut. Es besteht aus einem dritten Teil 15, das in eine als Hohlstange ausgebildete zweite Ventilstange 16 ausläuft. In der zweiten Ventilstange 16 ist die erste Ventilstange 14 verschiebbar gelagert. Zu seinem Rand hin besitzt das dritte Teil 15 eine Ausnehmung, die zusammen mit einer Ausnehmung am vierten Teil 18 eine Dichtung 17 aufnimmt.

Das vierte Teil 18, das mit dem dritten Teil 15 mittels einer Schraubverbindung lösbar verbunden ist, weist entlang seinem Umfang einen an die Dichtung 17 anschließende ersten konischen Abschnitt 19 auf, der mit dem entsprechenden ersten konusförmigen Abschnitt 4 des Gehäuseteils 1 korrespondiert. An diesen schließt sich ein zylindrischer Abschnitt 20 an, der mit dem entsprechenden zylindrischen Abschnitt 5 des Gehäuseteils korrespondiert. Der Durchmesser der beiden zylindrischen Abschnitte 5 und 20 ist so gewählt, daß zwischen ihnen ein Spalt mit einer Weite von typischerweise 0,15 mm gebildet wird. An den zylindrischen Abschnitt 20 schließt sich ein zweiter konusförmiger Abschnitt 21 an, der mit dem entsprechenden zweiten konusförmigen Abschnitt 21 im Gehäuseteil 1 korrespondiert.

Auf seiner dem Schieberkolben 7 zugewandten Seite weist das zweite Schließglied 9 eine Ausnehmung 22 auf, deren zylindrische Innenwand 23 mit dem ersten Ventilsitz fluchtet. Sie ist in ihren Abmessungen so dimensioniert, daß in ihr der Schieberkolben 7 mit seinem einen Ende aufgenommen werden kann.

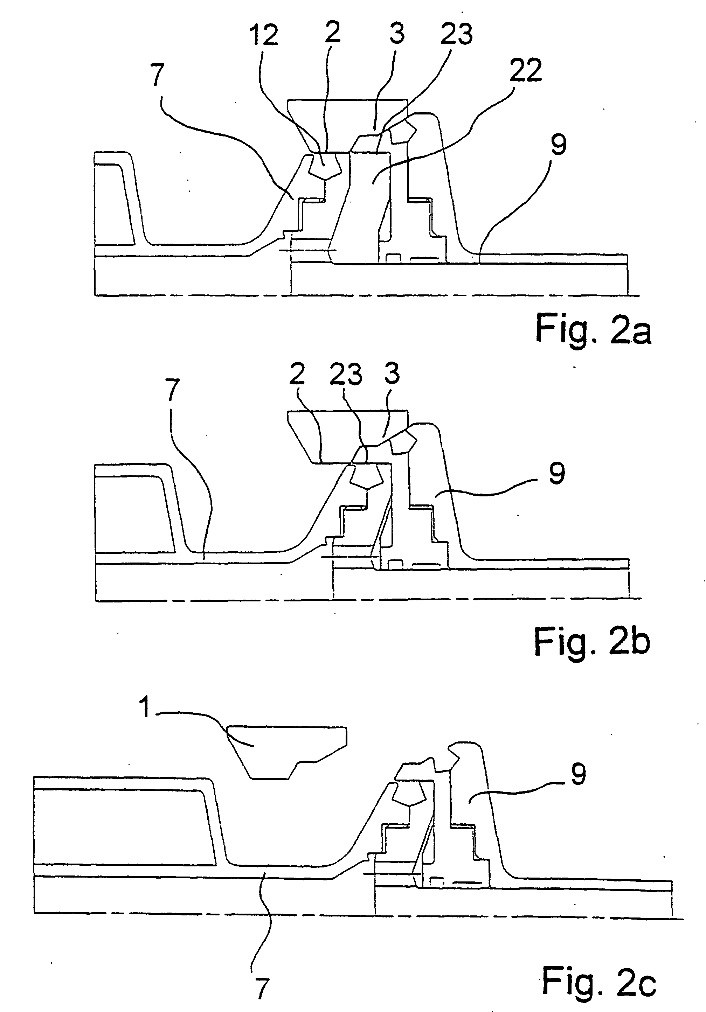

In den Figuren 2a - c werden die aufeinanderfolgenden Schritte beim Öffnen des Doppelsitzventils gezeigt.

Wie in Fig. 1 erläutert, bildet das Doppelsitzventil eine Doppeldichtung aus, wobei der Schiebekolben 7 im ersten Ventilsitz 2 und das zweite Schließglied 9 im zweiten Ventilsitz 3 aufgenommen ist.

Zum Öffnen wird der Schieberkolben 7 in Richtung auf das zweite Schließglied 9 angehoben. Dabei gleitet der Schieberkolben 7 mit seiner Dichtung 12 entlang der Wand des ersten Ventilsitzes 2 auf die Innenwand 23 der Ausnehmung 22 bis er am zweiten Schließglied 9 zur Anlage kommt (Fig. 2b). Der zwischen den beiden Schließgliedern 7, 9 gebildete Leckageraum bliebt während des Schaltvorgangs geschlossen. Beim weiteren Anheben des Schieberkolbens 7 wird das zweite Schließglied 9 aus seinem Sitz 3 angehoben. Durch weiteres Anliften der Schließglieder 7 und 9 wird das Ventil in seine Offenstellung überführt (Fig. 2c).

Die Schließbewegung des Ventils erfolgt in umgekehrter Reihenfolge. Durch Absenken der Schließglieder 7 und 9 verengt sich der Öffnungsquerschnitt des Ventils, bis schließlich die zylindrischen Abschnitte von zweitem Ventilsitz und zweitem Schließglied 9 unter Ausbildung eines Drosselspalts ineinander einfahren. Das zweite Schließglied 9 wird durch den konusförmigen Abschnitt 4 geführt und zentriert. Mit zunehmender Ausbildung des Drosselspalts verringert sich der Druck des auf die andere Seite übertretenden Stroms an Medium bis das zweite Schließglied vollständig in seinen Sitz eingefahren ist und eine erste Dichtung zwischen den mit dem Ventil verbundenen Leitungen ausbildet. Der Schieberkolben 7 löst sich beim weiteren Absenken vom zweiten Schließglied 9 und fährt unter Ausbildung einer zweiten Dichtung in den ersten Ventilsitz 2 ein. Er wird dabei vom konusförmigen Abschnitt 6 geführt und zentriert.

Zur Sitzreinigung werden die Schließglieder jeweils einzeln aus ihrer Ruhelage bewegt.

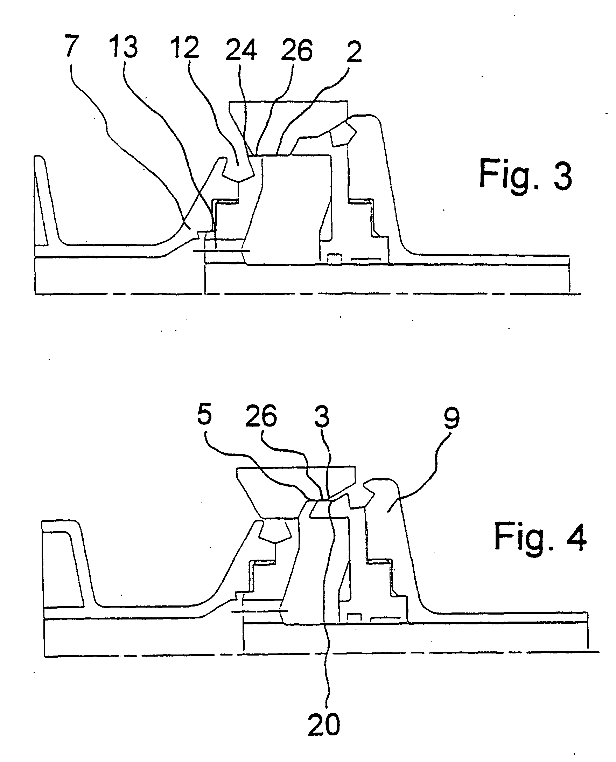

In Fig. 3 ist die Sitzreinigung des ersten Ventilsitzes gezeigt. Dazu wird der Schieberkolben 7 soweit abgesenkt, daß die Dichtung 12 vollständig aus dem ersten Ventilsitz 2 herausgefahren ist. Zwischen der zylindrischen Innenfläche des Ventilsitzes 2 und der zylindrischen Fläche 24 bildet sich ein zylinderförmiger Drosselspalt 26 aus, durch den Reinigungsflüssigkeit unter Reinigung des Ventilsitzes in den zwischen den Schließgliedern 7, 9 gebildeten Leckageraum eintreten kann, aus dem es über die Öffnung 13 abgeführt wird. Die Weite des Spalts beträgt typischerweise 0,15 mm. Sie kann jedoch in Abhängigkeit von der Dimensionierung der Leitungen und des Ventils beliebig variiert werden.

Wegen der Länge des Drosselspalts ist Volumenstrom des übertretenden Stroms an Reinigungsmittel relativ unempfindlich gegen Toleranzen im Reinigungshub. Druckstöße im Leckageraum während des Reinigungshubes werden zuverlässig vermieden.

In Fig. 4 ist der Reinigungshub des zweiten Schließglieds 9 dargestellt. Dazu wird das zweite Schließglied 9 soweit aus dem zweiten Ventilsitz 3 angehoben, daß sich zwischen dem zylindrischen Abschnitt 5 des Ventilsitzes 3 und dem zylindrischen Abschnitt 20 des zweiten Schließgliedes 9 ein Drosselspalt 26 ausbildet durch den zur Sitzreinigung Reinigungsmittel in den zwischen den Schließgliedern ausgebildeten Leckageraum übertreten kann. Auch hier ist wegen der Länge des Spaltes der Strom des übertretenden Reinigungsmittels relativ unempfindlich gegenüber Toleranzen im Reinigungshub. Druckspitzen während der Öffnungsbewegung werden vermieden.

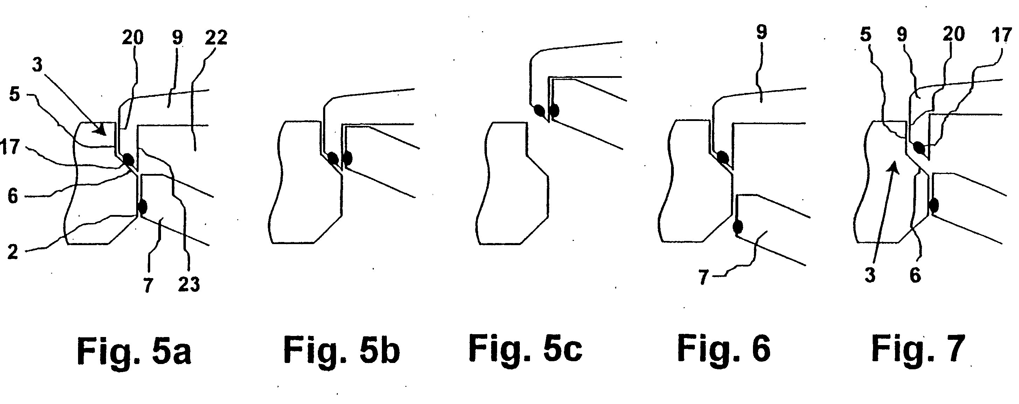

Die Figuren 5 bis 7 zeigen zu den Figuren 1 bis 4 analoge Betriebszustände einer zweiten Ausführungsform des Doppelsitzventils.

Schieberkolben 7 und Ventilsitz 2 stimmen in ihrem Aufbau mit den entsprechenden Teilen der ersten Ausführungsform des Doppelsitzventils überein. Der zweite Ventilsitz umfaßt einen zylindrischen Abschnitt 5 und einen sich in Richtung auf den ersten Ventilsitz 2 anschließenden konischen Abschnitt 6.

Das zweite Schließglied ist weitgehend analog zum zweiten Schließglied 9 der ersten Ausführungsform (Fig. 1) aufgebaut. Die Dichtung 17 ist jedoch am die Ausnehmung 22 umgebenden Rand vorgesehen und liegt in der Schließposition des Ventils an der in Richtung zum ersten Ventilsitz verlaufenden konischen Fläche 6 des Ventilsitzes an.

Die Öffnungs- bzw. Schließbewegung des Ventils erfolgt analog zur ersten Ausführungsform. Das erste Schließglied 7 wird angehoben und fährt in die Ausnehmung 22 des zweiten Schließgliedes ein (Fig. 5b). Es hebt in seiner weiteren Bewegung das erste Schließglied aus dessen Ventilsitz an, wobei zwischen den zylindrischen Flächen 5 und 20 ein Spalt geöffnet wird. Anschließend werden beide Schließglieder in die Offenstellung des Ventils überführt (Fig. 5c). Das Schließen des Ventils erfolgt in umgekehrter Reihenfolge der Schritte.

Der Reinigungshub für das erste Schließglied 7 (Fig. 6) entspricht dem bereits für die erste Ausführungsform (Fig. 3) beschriebenen.

Beim Reinigungshub des zweiten Ventilsitzes 3 wird das Schließglied 9 etwas angehoben. Nachdem sich die Dichtung 17 von der ihr zugeordneten Fläche 6 gelöst hat, kann Reinigungsmittel zur Sitzreinigung durch den zwischen den zylindrischen Flächen 5 und 20 gebildeten Spalt in den Leckageraum einfließen.

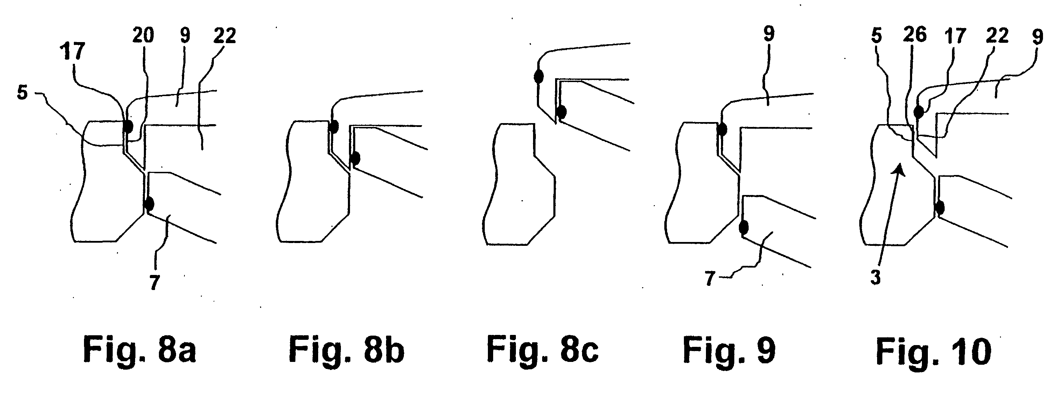

Bei der in den Figuren 8 bis 10 gezeigten dritten Ausführungsform des Doppelsitzventils ist die Dichtung 17 an der zylindrischen Fläche 20 des zweiten Schließglieds 9 angeordnet. Bei der Öffnungsbewegung fährt, wie bereits bei der ersten Ausführungsform beschrieben, das erste Schließglied 7 in die Ausnehmung 22 des zweiten Schließglieds 9 ein (Fig. 8b). Anschließend werden beide Schließglieder 7, 9 weiter angehoben, bis die Dichtung 17 aus der Fläche 5 herausgleitet und den zwischen den zylindrischen Flächen 5 und 20 des Ventilsitzes 3 bzw. des zweiten Schließgliedes 9 vorgesehenen Spalt freigibt. Anschließend werden beide Schließglieder 7, 9 weiter in die Offenstellung überführt (Fig. 8c). Bei der Schließbewegung bildet sich entsprechend zunächst zwischen den Flächen 5 und 22 der Spalt aus, ehe die Dichtung 17 in den Ventilsitz einfährt.

Der in Fig. 9 dargestellte Reinigungshub des ersten Schließglieds entspricht dem bereits bei der ersten Ausführungsform (Fig. 3) beschriebenen.

Beim in Fig. 10 dargestellten Reinigungshub des zweiten Ventilsitzes 3, wird das zweite Schließglied 9 so weit angehoben, daß die Dichtung 17 aus dem Ventilsitz 3 herausgefahren ist. Es wird dann der zwischen den zylindrischen Flächen 5 und 20 gebildete Spalt freigegeben, durch den zur Sitzreinigung Reinigungsmittel in den zwischen den Schließgliedern 7 und 9 gebildeten Leckageraum eindringen kann. Auch bei dieser Anordnung ist der Strom an Reinigungsstrom vergleichsweise unempfindlich gegenüber Toleranzen des Reinigungshubes.

### Bezugszeichenliste

- 1: Gehäuseteil
- 2: erster Ventilsitz
- 3: zweiter Ventilsitz
- 4: erster konusförmiger Abschnitt
- 5: zylindrischer Abschnitt
- 6: konusförmiger Abschnitt
- 7: Schieberkolben
- 8: erstes Teil
- 9: zweites Schließglied
- 10: zweites Teil
- 11: Ausgleichskolben
- 12: Dichtung
- 13: Öffnung
- 14: erste Ventilstange
- 15: drittes Teil
- 16: zweite Ventilstange
- 17: Dichtung
- 18: viertes Teil
- 19: erster konischer Abschnitt
- 20: zylindrischer Abschnitt
- 21: zweiter konusförmiger Abschnitt
- 22: Ausnehmung
- 23: zylindrische Innenwand
- 24: zylindrischer Abschnitt
- 25: Ablaufleitung
- 26: Drosselspalt

## Patentansprüche

1. Leckagefrei schaltendes Doppelsitzventil, umfassend:
ein Ventilgehäuseteil (1) mit mindestens zwei Öffnungen für zwei Leitungen zum Fluideinlaß und -auslaß, zwei zwischen diesen Öffnungen angeordneten koaxialen Ventilsitzen (2, 3), zwei Ventilschließgliedern (7, 9), die jeweils im Ventilgehäuse (1) zur koaxialen Bewegung relativ zueinander und zu den entsprechenden Ventilsitzen (2, 3) zwischen einer Offenstellung und einer Schließstellung geführt sind und in ihrer Schließstellung eine Doppeldichtung zwischen den besagten Öffnungen bewirken, wobei das erste Schließglied ein Schieberkolben (7) mit an seinem Endabschnitt angeordneten radialen Dichtmitteln (12) ist, der dazu vorgesehen ist, sich während seiner Öffnungsbewegung gegen das zweite Schließglied (9) anzulegen und letzteres bei der weiteren Öffnungsbewegung ebenfalls in seine Offenstellung zu bewegen, wobei der erste Ventilsitz (2) zylindrisch ist und in der Schließstellung den Schieberkolben (7) dichtend aufnimmt, und sowohl in der Schließstellung wie in der Offenstellung zwischen den Schließgliedern ein Leckageraum gebildet ist, der über einen Ablaufauslaß (25) permanent mit der Außenseite des Ventils verbunden ist,
und wobei das zweite Schließglied (9) an seinem dem Schieberkolben zugewandten Ende eine Ausnehmung (22) mit einer im wesentlichen zylindrischen, mit dem zylindrischen Ventilsitz (2) fluchtenden Umfangswand besitzt, und die Ausnehmung (22) so dimensioniert ist, um während der Öffnungsbewegung den Endabschnitt und die radialen Dichtmittel (12) des Schieberkolbens (7) dichtend aufzunehmen, bevor das zweite Schließglied (9) öffnet,
**dadurch gekennzeichnet,**
**daß** am zweiten Ventilsitz (3) eine zylindrische Innenfläche (5) und am zweiten Schließglied (9) ein dazu korrespondierender zylindrischer Abschnitt (20) vorgesehen ist, dessen Durchmesser geringfügig kleiner als der Durchmesser der zylindrischen Innenfläche (5) des zweiten Ventilsitzes (3) ist, und die zylindrischen Flächen (5, 20) beim Reinigungshub sowie der Schließ- und Öffnungsbewegung des zweiten Schließgliedes (9) zwischen sich einen Drosselspalt (26) ausbilden,
und **daß** am zweiten Schließglied (9) ein Dichtmittel (17) so vorgesehen ist, daß bei der Schließbewegung zunächst der Drosselspalt (26) ausgebildet wird, ehe das Dichtmittel (17) den Leckageraum gegen die Leitung abdichtet,
wobei der zweite Ventilsitz (3) mindestens einen konischen Abschnitt (4, 6) aufweist, der sich an die zylindrische Innenfläche (5) anschließt und einer der entsprechenden Abschnitte (19, 20) des zweiten Schließglieds (9) das Dichtmittel aufweist,
und wobei der Schieberkolben (7) eine Reinigungsstellung aufweist, die auf einer der Öffnungsbewegung entgegengesetzten Seite der Schließstellung angeordnet ist, so daß in der Reinigungsstellung des Schieberkolbens (7) zwischen einer zylindrischen Fläche (24) des Schieberkolbens (7) und dem ersten Ventilsitz (2) ein zylindrischer Drosselspalt (26) ausgebildet ist.

2. Doppelsitzventil nach Anspruch 1, **dadurch gekennzeichnet, daß** das Dichtmittel (17) am zweiten Schließglied (9) ebenfalls als Radialdichtung ausgebildet ist.

3. Doppelsitzventil nach Anspruch 1 oder 2, **dadurch gekennzeichnet, daß** das Dichtmittel (17) als axiale oder konische Dichtung an dem dem Schieberkolben (7) zugewandten Ende des zweiten Schließgliedes ausgebildet ist.

4. Doppelsitzventil nach Anspruch 1, 2 oder 3, **dadurch gekennzeichnet, daß** der konischen Abschnitt (6) des zweiten Ventilsitzes (3) sich vom zylindrischen. Abschnitt (5) des zweiten Ventilsitzes (3) zum ersten Ventilsitz (2) erstreckt.

5. Doppelsitzventil nach Anspruch 1, 2, 3 oder 4, **dadurch gekennzeichnet, daß** der konische Abschnitt (4) des zweiten Ventilsitzes sich zur Öffnungsseite des zweiten Schließglieds hin an den zylindrischen Abschnitt (5) anschließt.

6. Doppelsitzventil nach Anspruch 1, 2, 3, 4 oder 5, **dadurch gekennzeichnet, daß** das Schließglied (7, 9) aus zwei lösbar, vorzugsweise mittels einer Schraubverbindung, miteinander verbundenen Teilen (8, 10; 15, 18) aufgebaut ist, wobei zwischen den beiden Teilen das Dichtmittel (12, 17) vorgesehen ist.

## Claims

1. A double-seat valve which shifts in a leakage-free manner, comprising:
a valve-housing part (1) with at least two openings for two lines to the intake and outlet of fluids, two coaxial valve seats (2, 3) arranged between the said openings, two valve-closure members (7, 9) which are guided in each case in the valve housing (1) for coaxial movement relative to each other and to the corresponding valve seats (2, 3) between an open position and a closed position and which produce a double seal between the said openings in their closed position, wherein the first closure member is a slide piston (7) with radial sealing means (12) arranged at its end portion and it is designed to abut against the second closure member (9) during its opening movement and to move the said second closure member (9) likewise into its open position during the further opening movement, wherein the first valve seat (2) is cylindrical and receives the slide piston (7) in a sealed manner in the closed position, and a leakage space, which is permanently connected to the outside of the valve by way of a discharge outlet (25), is formed between the closure members both in the closed position and in the open position, and wherein the end of the second closure member (9) facing the slide piston has a recess (22) with a substantially cylindrical peripheral wall in alignment with the cylindrical valve seat (2), and the recess (22) is dimensioned in such a way as to receive the end portion and the radial sealing means (12) of the slide piston (7) in a sealed manner during the opening movement, before the second closure member (9) opens,
**characterized in that** a cylindrical inner face (5) is provided on the second valve seat (3) and a cylindrical portion (20) corresponding thereto is provided on the second closure member (9), the diameter of the cylindrical portion (20) being slightly smaller than the diameter of the cylindrical inner face (5) of the second valve seat (3), and the cylindrical faces (5, 20) form a throttle gap (26) between themselves during the cleaning stroke and during the closing and opening movements of the second closure member (9),
and a sealing means (17) is provided on the second closure member (9) in such a way that during the closure movement the throttle gap (26) is first formed before the sealing means (17) seals off the leakage space against the line,
wherein the second valve seat (3) comprises at least one conical portion (4, 6) which adjoins the cylindrical inner face (5), and one of the corresponding portions (19, 20) of the second closure member (9) comprises the sealing means,
and wherein the slide piston (7) has a cleaning position which is situated on a side of the closed position opposite the opening movement, so that a cylindrical throttle gap (26) is formed between a cylindrical face (24) of the slide piston (7) and the first valve seat (2) in the cleaning position of the slide piston (7).

2. A double-seat valve according to Claim 1, **characterized in that** the sealing means (17) on the second closure member (9) is likewise constructed in the form of a radial seal.

3. A double-seat valve according to Claim 1 or 2, **characterized in that** the sealing means (17) is constructed in the form of an axial or conical seal at the end of the second closure member facing the slide piston (7).

4. A double-seat valve according to Claim 1, 2 or 3, **characterized in that** the conical portion (6) of the second valve seat (3) extends from the cylindrical portion (5) of the second valve seat (3) to the first valve seat (2).

5. A double-seat valve according to Claim 1, 2, 3 or 4, **characterized in that** the conical portion (4) of the second valve seat adjoins the cylindrical portion (5) towards the opening side of the second closure member.

6. A double-seat valve according to Claim 1, 2, 3, 4 or 5, **characterized in that** the closure member (7, 9) is formed from two parts (8, 10; 15, 18) connected to each other in a releasable manner, preferably by means of a screw connexion, wherein the sealing means (12, 17) is provided between the two parts.

## Revendications

1. Vanne à double siège à commutation sans fuite comprenant :
une partie de boîtier de vanne (1) avec au moins deux ouvertures pour deux conduites d'entrée et de sortie de fluide, deux sièges de soupape (2, 3) coaxiaux, prévus entre ces ouvertures, deux organes d'obturation de soupape (7, 9) qui sont guidés dans le boîtier de soupape (1) pour se déplacer coaxialement l'un par rapport à l'autre et par rapport au siège de soupape (2, 3) correspondant, entre une position d'ouverture et une position de fermeture, en réalisant, en position de fermeture, un double joint d'étanchéité entre les ouvertures,
le premier organe d'obturation étant un piston coulissant (7) avec des moyens d'étanchéité (12) radiaux, prévus au niveau de son segment d'extrémité, de sorte que pendant son mouvement d'ouverture, ces moyens d'étanchéité s'appliquent contre le second organe de fermeture (9) et ce dernier, au cours de la poursuite du mouvement d'ouverture, vient également dans sa position d'ouverture, alors que
le premier siège de soupape (2) est cylindrique et en position de fermeture reçoit de manière étanche le piston coulissant (7), et à la fois en position de fermeture et en position d'ouverture il se forme une chambre de fuite entre les organes d'obturation, cette chambre étant reliée en permanence au côté extérieur de la vanne par une sortie (25), et que le second organe d'obturation (9) à son extrémité tournée vers le piston coulissant, a une cavité (22) à paroi périphérique essentiellement cylindrique, alignée sur le siège de soupape cylindrique (2), et dimensionnée pour recevoir, pendant le mouvement d'ouverture, le segment d'extrémité et le moyen d'étanchéité radial (12) du piston coulissant (7), de façon étanche, avant que le second organe d'obturation (9) s'ouvre,
**caractérisée en ce que**
le second siège de soupape (3) comporte une surface intérieure cylindrique (5) et le second organe d'obturation (9) comporte un segment (20) cylindrique correspondant dont le diamètre est légèrement inférieur à celui de la surface intérieure cylindrique (5) du second siège de soupape (3) et les surfaces cylindres (5, 20) forment entre elles un intervalle d'étranglement (26) lors de la course de nettoyage ainsi que lors du mouvement de fermeture et d'ouverture du second organe d'obturation (9), et
le second organe d'obturation (9) comporte un moyen d'étanchéité (17) de façon que lors du mouvement de fermeture il se forme tout d'abord l'intervalle d'étranglement (26) avant que le moyen d'étanchéité (19) ferme de manière étanche l'espace de fuite par rapport à la conduite,
le second siège de soupape (3) a au moins un segment conique (4, 6) qui fait suite à la surface intérieure cylindrique (5) et l'un des segments correspondants (19, 20) du second organe d'obturation (9) comporte le moyen d'étanchéité,
et le piston coulissant (7) présente une position de nettoyage prévue sur un côté de la position de fermeture à l'opposé du mouvement d'ouverture de sorte que dans la position de nettoyage du piston coulissant (7), un intervalle d'étranglement cylindrique (26) se forme entre la surface cylindrique (24) du piston coulissant (7) et le premier siège de soupape (2).

2. Vanne à double siège selon la revendication 1,
**caractérisée en ce que**
le moyen d'étanchéité (17) est réalisé sur le second organe d'obturation (9) également comme joint radial.

3. Vanne à double siège selon la revendication 1 ou 2,
**caractérisée en ce que**
le moyen d'étanchéité (17) est réalisé comme joint axial ou conique sur l'extrémité du second organe d'obturation tourné vers le piston coulissant (7).

4. Vanne à double siège selon la revendication 1, 2 ou 3,
**caractérisée en ce que**
le segment conique (6) du second siège de soupape (3) s'étend à partir du segment cylindrique (5) du second siège de soupape (3) vers le premier siège de soupape (2).

5. Vanne à double siège selon l'une des revendications 1, 2, 3, ou 4,
**caractérisée en ce que**
le segment conique (4) du second siège de soupape fait suite au segment cylindrique (5) du côté d'ouverture du second organe d'obturation.

6. Vanne à double siège selon l'une des revendications 1, 2, 3, 4, ou 5,
**caractérisée en ce que**
l'organe d'obturation (7, 9) se compose de deux pièces (8, 10 ; 15, 18) amovibles, de préférence reliées par une liaison vissée, et le moyen d'étanchéité (12, 17) est prévu entre les deux pièces.
